(19) Europäisches Patentamt
European Patent Office
Office européen des brevets

(11) **EP 3 071 461 B1**

(12) **FASCICULE DE BREVET EUROPEEN**

(45) Date de publication et mention
de la délivrance du brevet:
**06.12.2017 Bulletin 2017/49**

(21) Numéro de dépôt: **14789801.9**

(22) Date de dépôt: **17.10.2014**

(51) Int Cl.:
***B60W 30/09*** *(2012.01)*      ***B60W 30/095*** *(2012.01)*
***B60W 30/02*** *(2012.01)*

(86) Numéro de dépôt international:
**PCT/EP2014/072356**

(87) Numéro de publication internationale:
**WO 2015/071052 (21.05.2015 Gazette 2015/20)**

(54) **PROCEDE ET DISPOSITIF DE PILOTAGE AUTOMATIQUE D'UN VEHICULE**

VERFAHREN UND VORRICHTUNG ZUR AUTOMATISCHEN STEUERUNG EINES FAHRZEUGES

METHOD AND DEVICE FOR AUTOMATICALLY CONTROLLING A VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.11.2013 FR 1361245**

(43) Date de publication de la demande:
**28.09.2016 Bulletin 2016/39**

(73) Titulaire: **Renault S.A.S.**
**92100 Boulogne-Billancourt (FR)**

(72) Inventeur: **MINOIU ENACHE, Nicoleta**
**F-78000 Versailles (FR)**

(56) Documents cités:
**US-A1- 2011 264 328     US-A1- 2012 101 713**

**Description**

L'invention concerne un procédé et un dispositif de pilotage automatique d'un véhicule, notamment d'un véhicule automobile. L'invention concerne aussi un véhicule équipé de ce dispositif.

Les recherches sur les véhicules à pilotage automatique au sol sont nombreuses car l'autonomie ainsi procurée au véhicule permet à un utilisateur du véhicule de se décharger de tout ou partie des tâches de conduite, souvent fastidieuses, pour se consacrer à d'autres activités.

Le document US2008/0208461 divulgue par exemple un système pour réguler le parcours d'un engin de chantier en générant une trajectoire à suivre par l'engin, basé sur un algorithme connu sous le nom de « pure poursuite » qui consiste à faire décrire au véhicule un arc de cercle qui rejoint la trajectoire à une certaine distance de visée en avant du véhicule. Le système divulgué dans ce document, plus adapté aux chantiers qu'à la circulation routière, ne prend pas en compte les besoins de confort qu'on est en droit d'attendre d'un véhicule plus orienté vers le transport de personnes humaines, notamment en termes de tenue de route et d'interactions physiques avec les passagers comme par exemple en ce qui concerne l'accélération latérale.

Le document US2009/0287376 prend en compte dans un filtre de Kalman une accélération mesurée par un capteur G de façon à élaborer une consigne d'angle de braquage d'un véhicule. Cependant la complexité du dispositif présenté peut présenter certains inconvénients en termes de coût et de robustesse.

Le document US2012/0101713 divulgue un procédé pour produire un cheminement optimal d'évitement de collision d'un véhicule hôte qui pourrait potentiellement heurter un véhicule cible. Le procédé détermine notamment une accélération latérale optimale en termes de braquage pour le cheminement optimal du véhicule, basée sur une ellipse de friction et un freinage optimal. Le cheminement optimal divulgué qui a pour but d'éviter le véhicule cible, a pour inconvénient de dévier le véhicule hôte de sa trajectoire initiale de référence.

Pour remédier aux inconvénients de l'état antérieur de la technique, l'invention a pour objet un procédé de pilotage automatique d'un véhicule comprenant :

- une étape initiale dans laquelle sont données une trajectoire locale de référence et une vitesse potentielle du véhicule ;
- une étape de calcul d'une consigne automatique d'angle de braquage qui fait décrire au véhicule un arc de cercle comportant un point d'intersection avec la trajectoire locale de référence à une distance de visée du véhicule, dans laquelle est calculée une accélération latérale proportionnelle au carré de de la vitesse potentielle du véhicule décrivant l'arc de cercle ;

- une étape de comparaison de l'accélération latérale calculée avec une valeur maximale admissible d'accélération latérale ;
- une étape de génération d'une consigne de vitesse positionnée à une valeur égale à celle de la vitesse potentielle lorsque l'accélération latérale a une valeur inférieure à la valeur maximale admissible d'accélération latérale ;
- une étape d'ajustement dans laquelle la valeur de la vitesse potentielle est diminuée lorsque l'accélération latérale a une valeur supérieure ou égale à la valeur maximale admissible d'accélération latérale de façon à calculer une accélération latérale diminuée en réitérant l'étape de calcul.

Particulièrement la distance de visée qui sépare le véhicule du point d'intersection avec la trajectoire, est calculé dans l'étape de calcul, proportionnellement à la vitesse potentielle du véhicule.

Plus particulièrement la distance de visée qui sépare le véhicule du point d'intersection avec la trajectoire, est calculé dans l'étape de calcul, en multipliant la vitesse potentielle du véhicule par un coefficient variable croissant tant que l'accélération latérale a une valeur supérieure ou égale à la valeur maximale admissible d'accélération latérale et qu'un écart entre l'arc de cercle et la trajectoire locale de référence est inférieur en valeur absolue à un maximum admissible d'écart.

De préférence, l'écart est calculé égal au plus grand des écarts mesurables entre un point de l'arc de cercle et un point de la trajectoire qui se trouvent l'un et l'autre sur un même rayon de l'arc de cercle.

Plus précisément, le maximum admissible d'écart est calculé dans une étape, égal à une surévaluation de la valeur absolue de l'écart calculé dans exécution précédente d'étape de calcul.

Avantageusement, le procédé comprend une étape de génération de consigne de vitesse positionnée à une valeur égale à celle de la vitesse potentielle avant diminution lorsque la valeur de la vitesse potentielle après diminution est inférieure à une valeur minimale admissible de vitesse potentielle.

L'invention a aussi pour objet un programme d'ordinateur comprenant des instructions de code de programme pour l'exécution des étapes du procédé selon l'invention lorsque le programme est exécuté sur un ou plusieurs ordinateurs.

L'invention a encore pour objet un dispositif de pilotage automatique d'un véhicule comprenant un module de pilotage automatique recevant en entrée un descriptif de trajectoire locale de référence, module comportant en mémoire un programme d'ordinateur selon l'invention pour générer une consigne automatique d'angle de braquage de façon à maintenir une accélération latérale calculée en deçà d'une valeur maximale admissible d'accélération latérale.

Particulièrement, le dispositif de pilotage automatique selon l'invention, reçoit en entrée un retour de vitesse mesurée de façon à générer une consigne automatique de couple de freinage et/ou d'accélération qui a pour but de maintenir l'accélération latérale en deçà d'une valeur maximale admissible d'accélération latérale.

L'invention a enfin pour objet un véhicule automobile comprenant un dispositif de pilotage automatique selon l'invention pour fonctionner en mode autonome.

D'autres caractéristiques et avantages apparaîtront à la lecture de la description qui suit, en référence aux dessins annexés dans lesquels :

- la figure 1 représente un schéma de dispositif de contrôle de véhicule conforme à l'invention,
- les figures 2 et 3 représentent des trajectoires possibles de véhicule,
- la figure 4 est un schéma pour expliquer les paramètres physiques pris en compte par un procédé conforme à l'invention,
- les figures 5, 5a et 5b montrent des étapes de procédé conforme à l'invention,
- la figure 6 montre des étapes complémentaires de procédé conforme à l'invention.

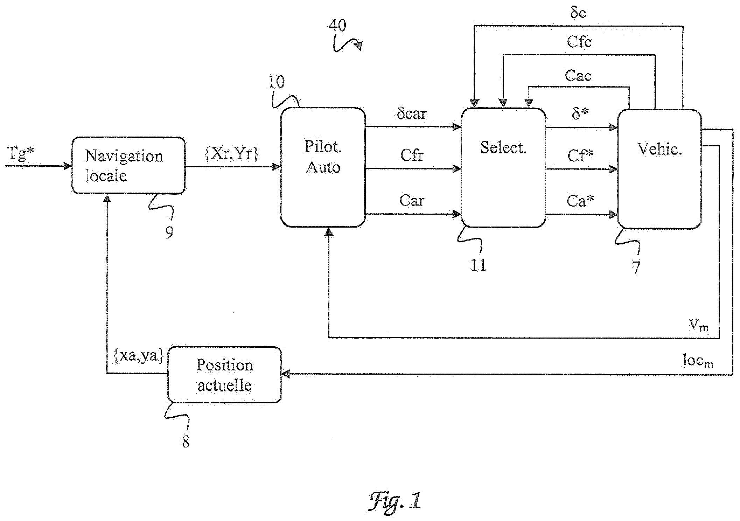

La figure 1 montre un dispositif 40 qui fournit à un véhicule 7 des consignes d'angle de braquage $\delta^*$, de couple de freinage Cf* et de couple d'accélération Ca* répartis sur des roues du véhicule 7 de façon à pouvoir en assurer un contrôle automatique de trajectoire.

L'angle de braquage permet de changer la direction du véhicule mais il ne suffit pas toujours à lui seul pour maintenir ou ramener le véhicule sur une trajectoire à suivre. Des ralentissements et accélérations appliqués à bon escient peuvent parfois être utiles.

Par exemple, une consigne positive de couple d'accélération Ca* permet d'accélérer un véhicule équipé d'un moteur thermique en augmentant son régime moteur. Une consigne positive de couple de freinage Cf* permet de ralentir le véhicule en exerçant une pression proportionnelle sur des freins dissipatifs qui se conjugue généralement avec une baisse de régime du moteur thermique asservi à une consigne nulle de couple d'accélération Ca*.

Par exemple encore, une consigne positive de couple d'accélération Ca* permet d'accélérer un véhicule équipé d'une machine électrique de traction en alimentant la machine avec un courant électrique positif. Une consigne positive de couple de freinage Cf* permet de ralentir le véhicule en alimentant la machine avec un courant électrique négatif sous forme de freinage récupératif qui peut se renforcer en exerçant une pression proportionnelle sur les freins dissipatifs.

Le dispositif 40 comprend un module 10 de pilotage automatique qui génère des consignes automatiques d'angle de braquage $\delta$car, de couple de freinage Cfr et de couple d'accélération Car.

Bien que représenté sur la figure 1 à l'extérieur du véhicule 7 pour en faciliter l'exposé, on comprendra que le dispositif 40 est au moins partiellement, voire totalement installé dans le véhicule 7.

Le module 10 met par exemple en oeuvre un microprocesseur, une mémoire et des coupleurs d'entrées-sorties (non représentés) d'un calculateur temps réel embarqué du véhicule 7. Les coupleurs d'entrées-sorties permettent de manière conventionnelle au module 10 de communiquer avec d'autres calculateurs locaux au sein du véhicule 7 et/ou avec des organes du véhicule par liaison filaires ou par bus de communication à l'un des standards du monde automobile comme par exemple le réseau CAN, le réseau Ethernet dédié automobile ou autre. La mémoire permet de contenir des valeurs de calibrage pour adapter le dispositif 40 au type du véhicule 7, comme par exemple sa longueur L entre le centre de la roue avant et le centre de moyeu de la roue arrière. La mémoire permet aussi de contenir un programme d'ordinateur comprenant des instructions de code de programme pour l'exécution d'étapes de procédé exposé dans la suite de la description lorsque le programme est exécuté sur un ordinateur, notamment par le microprocesseur mentionné ci-dessus.

Si on prévoit le véhicule 7 pour fonctionner en permanence en mode autonome ou en mode télécommandé qui sont l'un et l'autre un mode automatique possible de fonctionnement du véhicule, les consignes fournies au véhicule 7, d'angle de braquage $\delta^*$, de couple de freinage Cf* et de couple d'accélération Ca*, sont directement égales respectivement aux consignes automatiques d'angle de braquage $\delta$car, de couple de freinage Cfr et de couple d'accélération Car générées par le module 10 de pilotage automatique.

Si on prévoit le véhicule 7 pour fonctionner au choix soit en mode automatique, soit en mode manuel, les consignes automatiques d'angle de braquage $\delta$car, de couple de freinage Cfr et de couple d'accélération Car générées par le module 10 de pilotage automatique sont transmises à un module 11 de sélection de mode qui reçoit par ailleurs des consignes manuelles d'angle de braquage $\delta$c, de couple de freinage Cf et de couple d'accélération Ca en provenance respectivement d'un volant de direction, d'une pédale de frein et d'une pédale d'accélérateur (non représentés) actionnés de manière connue en soi par un conducteur humain du véhicule 7.

Dans l'option de véhicule à fonctionnement bimodal, le module 11 de sélection est par exemple installé dans un calculateur temps réel ou sur une carte électronique du véhicule 7. En exécutant des commandes numériques par bus ou filaires, actionnées par le conducteur humain ou par un autre calculateur, le module 11 de sélection commute les consignes fournies au véhicule 7 d'angle de braquage δ*, de couple de freinage Cf* et de couple d'accélération Ca* respectivement en mode manuel sur les consignes manuelles d'angle de braquage δc, de couple de freinage Cfc et de couple d'accélération Cac et alternativement en mode automatique sur les consignes automatiques d'angle de braquage δcar, de couple de freinage Cfr et de couple d'accélération Car reçues du module 10, de façon semblable par exemple au système expliqué dans la demande internationale de brevet WO2013/150244.

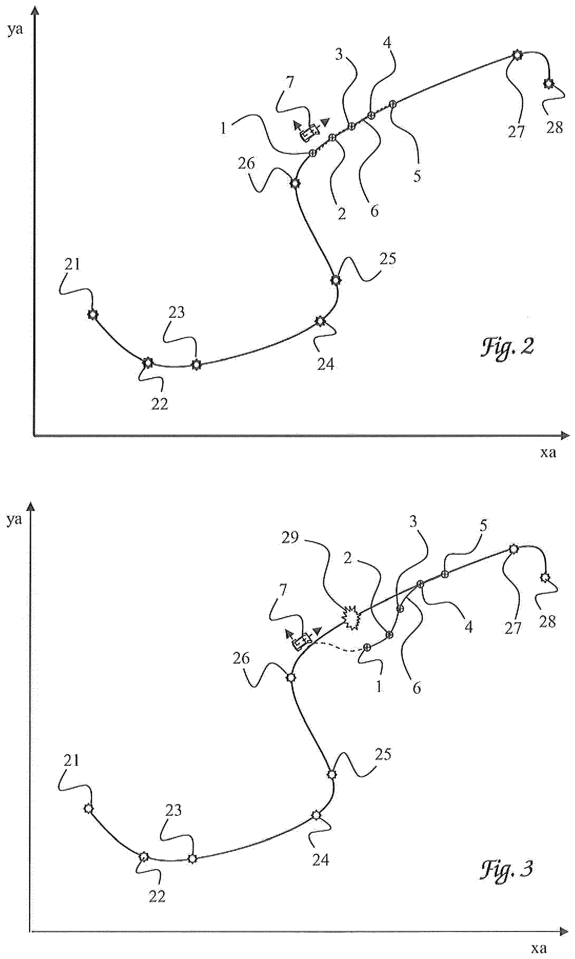

Un module 8 de position actuelle donne en temps réel des coordonnées xa, ya de position dans un repère absolu comme celui représenté sur les figures 2 et 3. Les coordonnées absolues sont élaborées de diverses manières connues à partir d'informations locales $loc_m$, par exemple de type géolocalisation par satellite notamment lorsque le véhicule se déplace à l'air libre, de type podomètre notamment lorsque le véhicule se déplace dans un tunnel ou dans un parking souterrain, voire de type centrale inertielle si un besoin particulier le justifie. Les coordonnées absolues peuvent aussi être élaborées de diverses manières connues à partir d'informations distantes, par exemple de type détection radar à partir d'une tour de contrôle, de type système de vidéosurveillance sur un site protégé ou de type triangulation à partir de stations de base en télécommunication mobile.

Un module 9 de navigation locale reçoit d'une part les coordonnées absolue xa, ya du véhicule 7 en provenance du module 8 et d'autre part un descriptif de trajectoire globale de référence Tg* partant d'un point de départ 21 pour rejoindre un point d'arrivée 28 en suivant un itinéraire passant par des points singuliers 22, 23, 24, 25, 26, 27 repérés sur une cartographie exprimée dans le même repère que celui des coordonnées absolue xa, ya du véhicule 7. Les points singuliers peuvent donner des positions de carrefours, de virages, d'entrées en zone à vitesse limitée ou autres comme on peut en rencontrer généralement sur les cartes routières ou les plans de sites privés.

Le module 9 élabore à instants réguliers une trajectoire locale de référence {Xr, Yr} qui part du véhicule et se termine à une certaine distance en avant du véhicule de façon à suivre au mieux la trajectoire globale de référence Tg* à long terme.

La trajectoire locale de référence {Xr, Yr} exprimée dans un repère relatif x, y lié au véhicule, est calculée de manière connue par ailleurs hors du cadre de l'invention (document WO2013/087514 ou autres).

La trajectoire locale de référence repérée 6 sur les figures 2 à 4, comprend un nombre donné RTajL de points discrets 1, 2, 3, 4, 5 d'ordonnées respectives y1=0, y2, y3, y4, y5 mesurées parallèlement à l'essieu arrière du véhicule 7 à partir de son centre et d'abscisses respectives x1, x2, x3, x4, x5 mesurées à partir du milieu de l'essieu arrière du véhicule 7 selon un axe qui joint le milieu de l'essieu arrière au milieu de l'essieu avant du véhicule 7. Les abscisses et les ordonnées des points discrets qui ne sont pas des références mais des valeurs, ne sont pas reportées sur les figures pour ne pas surcharger inutilement les dessins.

Sur la figure 2, la trajectoire locale de référence repérée 6 se superpose sur un tronçon de la trajectoire globale de référence Tg* à l'avant du véhicule, ce qui est le cas le plus général. Le calcul des coordonnées absolues des points 1 à 5 consiste simplement à discrétiser la portion de trajectoire globale en avant du véhicule. Le calcul des coordonnées relatives des points 1 à 5 consiste simplement en un calcul de changement de repère cartésien largement enseigné à l'école dans le domaine technique considéré.

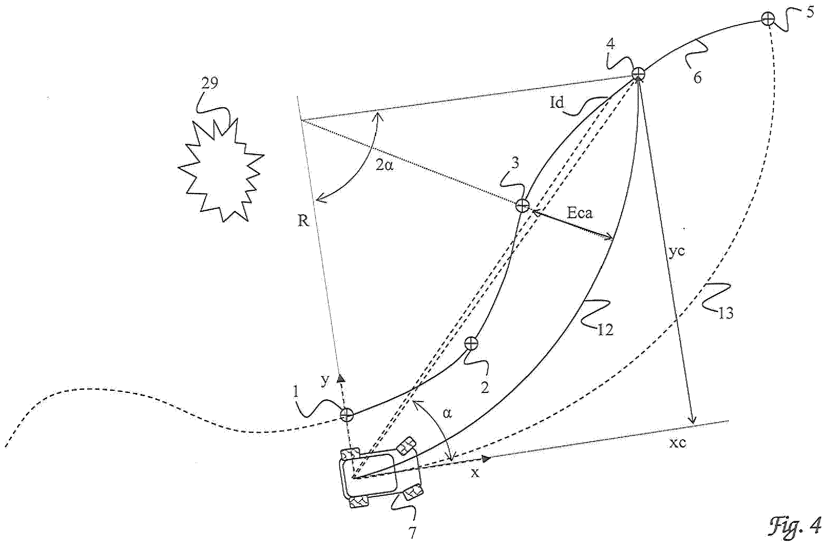

Sur la figure 3, la trajectoire locale de référence repérée 6 dévie de la trajectoire globale de référence Tg* à l'avant du véhicule, ce qui est le cas par exemple pour éviter un obstacle 29 détecté par un ou plusieurs capteurs installés sur le véhicule 7 ou à demeure le long du parcours comme par exemple des caméras vidéo. Les capteurs ne pouvant pas nécessairement capturer l'état de parcours sur la trajectoire globale de référence en aval de l'obstacle 29, son intégralité n'est pas nécessairement calculée dès la détection. La partie en pointillés correspond à une portion de trajectoire 6 qui débute au moment où le véhicule 7 amorce une sortie de la trajectoire globale pour éviter l'obstacle 29. Les points 1 à 5 appartiennent à la trajectoire 6 telle qu'elle est calculée au moment où le véhicule passe l'obstacle 29 comme représenté de manière amplifiée en figure 4.

D'autres cas peuvent correspondre à une trajectoire locale s'éloignant sensiblement du tronçon de trajectoire globale en avant du véhicule, par exemple lorsque la trajectoire globale repérée sur une cartographie ne se superpose pas parfaitement à une ligne médiane de la voie de circulation, suite par exemple à une modification récente de la chaussée. Des capteurs du véhicule adaptés pour détecter le marquage au sol, permettent alors en connexion avec le module 9 de navigation locale, de recadrer la trajectoire locale pour la faire coïncider avec la ligne médiane de la voie de circulation allouée au véhicule.

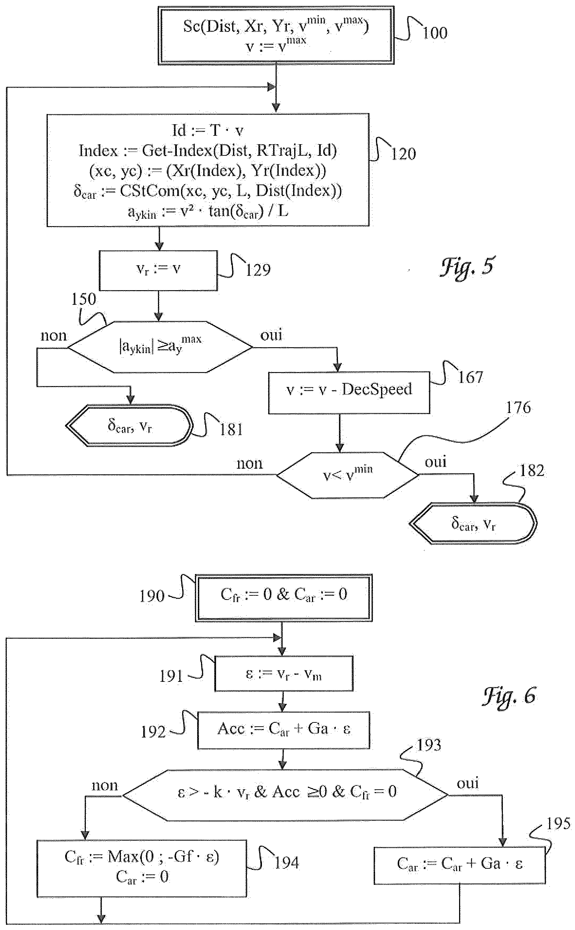

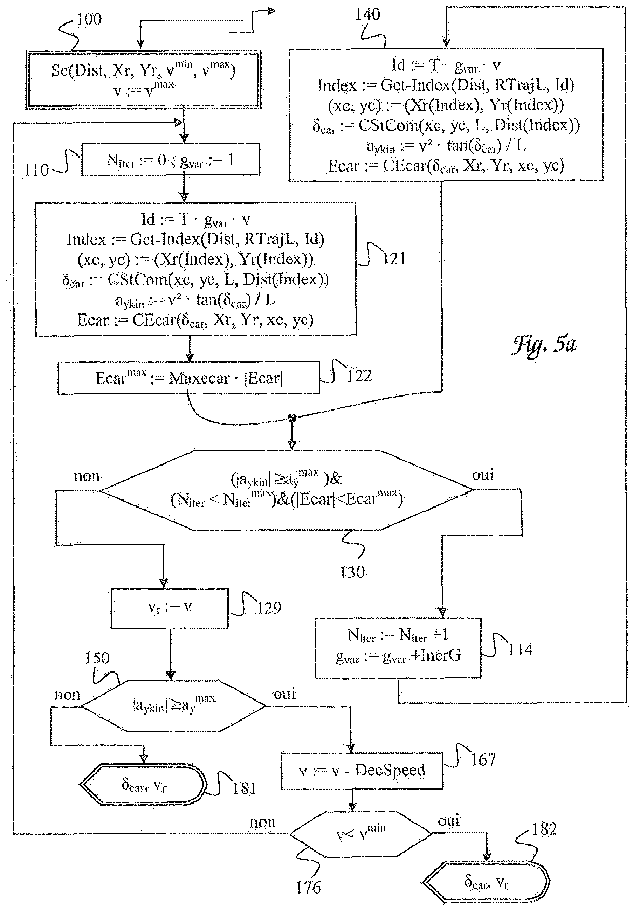

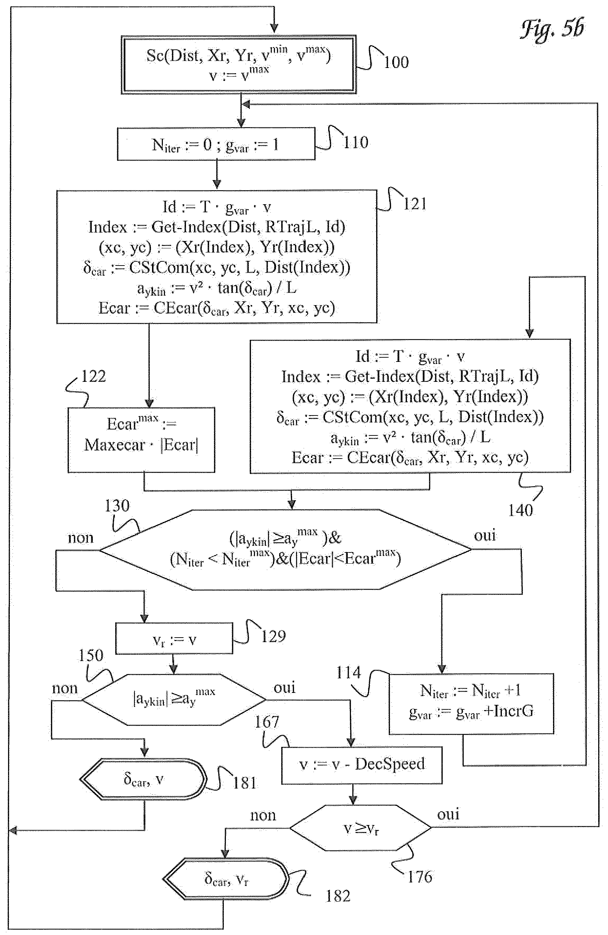

Le module 10 de pilotage automatique exécute un procédé dont les étapes essentielles de différentes mises en oeuvre possibles sont expliquées maintenant en référence aux figures 5, 5a, 5b et 6.

Le procédé ci-dessous exposé, permet de faire suivre au véhicule 7 la trajectoire locale de référence 6 en générant une consigne automatique d'angle de braquage δcar et une consigne automatique de vitesse vr à partir de laquelle peuvent être générées des consignes automatiques de couple de freinage Cfr et de couple d'accélération Car.

La consigne automatique d'angle de braquage δcar est calculée dans une étape 120 en fonction d'une part de la longueur L entre le centre de l'essieu de roue avant et le centre de l'essieu de roue arrière et d'autre part d'une distance de visée Id qui sépare le centre de l'essieu de roue arrière d'un point 4 à l'intersection de la trajectoire locale 6 et d'un arc de cercle 12 que le véhicule 7 parcourt lorsque l'angle de braquage δcar est appliqué à ses roues directrices comme représenté sur la figure 4.

La distance de visée Id est calculée dans l'étape 120 comme étant égale au produit d'une vitesse potentielle v du véhicule par une constante T préalablement déterminée. On constate que la constante T est homogène à un temps qui représente une durée nécessaire au véhicule 7 pour rejoindre la trajectoire locale 6 en suivant la corde de l'arc de cercle 12 ci-dessus mentionné. La valeur de la constante T n'est pas très éloignée d'une durée effective nécessaire au véhicule 7 pour atteindre le point 4 de la trajectoire lorsque la longueur de l'arc de cercle 12 est petite devant son rayon de courbure R. On comprend aisément que si la valeur de la constante T est trop grande, le véhicule aura tendance à rester trop longtemps hors de la trajectoire avant de la rejoindre et qu'une valeur trop faible est source d'instabilité. Ainsi la valeur de la constante T est déterminée pendant la mise au point du véhicule par exemple en cherchant par des essais successifs à réduire la constante T à la limite d'apparitions d'instabilités puis à légèrement la ré-augmenter avec une marge de sécurité avant de la stocker en mémoire de l'électronique de commande du véhicule. Il n'existe pas de valeur universelle de la constante T qui est liée à la morphologie du véhicule et qui peut donc être différente d'un véhicule à l'autre.

La vitesse potentielle v est initialisée dans une étape 100 à une valeur maximale possible $v^{max}$ de vitesse. La valeur maximale possible $v^{max}$ de vitesse peut résulter d'une limitation de vitesse autorisée sur le tronçon routier parcouru par le véhicule, d'une consigne de vitesse imposée par l'utilisateur du véhicule, d'une régulation d'espacement avec un véhicule précédent roulant à une vitesse de valeur comparable à la valeur maximale possible $v^{max}$ de vitesse, ou d'autres conditions de circulation du véhicule. La valeur maximale possible $v^{max}$ de vitesse ainsi qu'une valeur minimale possible $v^{min}$ de vitesse sont de préférence scrutées périodiquement en étape 100 de façon à tenir compte des évolutions de conditions de circulation du véhicule. La valeur minimale possible $v^{min}$ de vitesse peut résulter d'une contrainte légale sur le tronçon routier parcouru par le véhicule, d'une consigne de vitesse minimale imposée par l'utilisateur du véhicule, d'une décélération longitudinale maximale acceptable pour respecter un confort des passagers, d'une régulation de respect de délai d'arrivée, ou d'autres conditions de circulation du véhicule.

La consigne automatique d'angle de braquage δcar est calculée dans l'étape 120 en exécutant l'algorithme expliqué à présent.

Les coordonnées relatives xc, yc du point 4 d'intersection dans le repère local lié au véhicule, sont déterminées comme étant celles du point de la trajectoire locale 6 qui satisfait au mieux la condition de distance de visée Id.

La trajectoire locale 6 est donnée dans l'étape 100 sous forme d'une fonction cartésienne continue ou sous forme d'un ensemble discret de points de coordonnées spécifiées par des vecteurs Xr, Yr.

S'il existe un point de la trajectoire locale 6 dont les coordonnées vérifient l'équation :

$$(i) \quad \sqrt{xc^2 + yc^2} = Id$$

ce point est sélectionné.

Ce point n'existe pas nécessairement, notamment lorsque la trajectoire locale 6 est exprimée de façon discrète au moyen d'un couple de vecteurs Xr, Yr définissant un nombre discret RTrajL de points 1, 2, 3, 4, 5 de coordonnées relatives xr, yr dans le repère lié au véhicule.

Une façon élégante dans ce cas particulier pour retrouver les coordonnées xc, yc du point d'intersection 4, est de générer un vecteur Dist de dimension cardinale RTrajL égale à celle des vecteurs Xr, Yr, et dont chaque coordonnée Ir associée à un point 1, 2, 3, 4, 5 de la trajectoire 6, est donnée par la formule :

$$(ii) \quad Ir := \sqrt{xr^2 + yr^2}$$

Il est possible d'effectuer le calcul du vecteur Dist dans l'étape 100.

On trouve alors dans l'étape 120 l'exécution d'un sous-programme nommé par exemple Get-Index permettant d'obtenir la valeur Index du rang de la coordonnée Ir du vecteur Dist qui a la valeur la plus proche de celle de la distance de visée Id.

Une façon simple de réaliser le sous-programme Get-Index est par exemple de programmer des instructions consistant à parcourir les coordonnées Ir du vecteur Dist et à sélectionner la valeur Index de la plus grande valeur Iri inférieure à Id. Si le nombre de valeurs inférieures à Id est inférieur à RTrajL, des instructions consistent à sélectionner la plus petite valeur Irs supérieure à Id puis d'autres instructions consistent à substituer la valeur Index de la plus petite valeur Irs à la valeur Index de la plus grande valeur Iri si la plus petite valeur Irs est plus proche de celle de la distance de visée Id que ne l'est la plus grande valeur Iri.

Le point 4 sélectionné est alors celui dont les coordonnées relatives xc, yc sont respectivement égales aux coordonnées Xr(Index), Yr(Index) de rang Index dans les vecteurs Xr, Yr.

La distance de visée Dist(Index) sur l'axe de visée du point 4 à partir du centre du moyeu arrière du véhicule 7, peut alors être sensiblement inférieure ou sensiblement supérieure à la distance de visée Id prévue.

Un angle $\alpha$ entre l'axe de visée du point 4 et l'axe médian du véhicule a pour sinus sin $\alpha$ donné par la formule :

$$(\text{iii}) \quad \sin \alpha = \text{Yr(Index)} / \text{Dist(Index)}$$

Lorsque le véhicule 7 suit l'arc de cercle 12, son axe médian est en permanence tangent à l'arc de cercle 12. Des connaissances élémentaires en géométrie montrent que l'angle au centre de l'arc de cercle 12 est égal au double de l'angle $\alpha$.

Le calcul de la consigne automatique d'angle de braquage $\delta$car en étape 120 est réalisé par exemple au moyen d'un sous-programme CStCom qui utilise la formule :

$$(\text{iv}) \quad \delta\text{car} := \text{sat} \left( \text{Arctan} \left( 2 \cdot L \cdot \text{Yr(Index)} / \text{Dist}^2(\text{Index}) \right), \delta\text{max} \right)$$

La formule ci-dessus exprime que la consigne automatique d'angle de braquage $\delta$car est égale au premier terme d'une fonction de saturation, limité à une plage de valeurs comprise entre deux bornes de signes opposés égales en valeur absolue à un angle de braquage maximal $\delta$max permis par le véhicule.

Une accélération latérale potentielle $a_{ykin}$ est aussi calculée dans l'étape 120 en fonction d'une part de la longueur L entre le centre de l'essieu de roue avant et le centre de l'essieu de roue arrière et d'autre part de la vitesse potentielle v et de la consigne automatique d'angle de braquage $\delta$car au moyen de la formule suivante :

$$(\text{v}) \quad a_{ykin} := v^2 \cdot \tan(\delta\text{car}) / L$$

Dans le cas particulier évoqué ci-dessus où la trajectoire locale 6 est spécifiée de façon discrète, l'accélération latérale potentielle $a_{ykin}$ peut aussi être calculée au moyen de la formule suivante :

$$(\text{vi}) \quad a_{ykin} := \text{sat}( 2 \cdot v^2 \cdot \text{Yr(Index)} / \text{Dist}^2(\text{Index}), \tan(\delta\text{max}))$$

$$(\text{vii}) \quad a_{ykin} \approx \text{sat}( 2 \cdot \text{Yr(Index)} / T^2, \tan(\delta\text{max}))$$

La consigne automatique de vitesse $v_r$ est positionnée dans une étape 129 à une valeur égale à celle de la valeur potentielle de vitesse v utilisée dans l'étape 120.

Une étape de test 150 consiste à détecter si l'accélération latérale potentielle $a_{ykin}$ dépasse en valeur absolue une valeur maximale admissible d'accélération latérale $a_y{}^{max}$. La valeur maximale admissible d'accélération latérale $a_y{}^{max}$ est prédéterminée en fonction de divers critères tels que l'adhérence des roues sur la chaussée, un seuil cliniquement tolérable pour un être humain, un mode de conduite à orientation plus sportive ou plus confortable ou d'autres critères.

La valeur généralement reconnue comme seuil de confort passager est 0,4g, en d'autres termes un peu moins de la moitié de l'accélération terrestre g=9,881m/s$^2$. Plus généralement, le véhicule doit avoir un comportement qui ne fait pas peur aux piétons non plus. D'autre part, la combinaison de l'accélération latérale et de l'accélération longitudinale ne doit pas excéder l'ellipse de friction qui est propre au véhicule considéré. En cas de besoin d'un fort freinage ou d'une forte accélération, l'accélération latérale doit être réduite encore.

Une étape 181 est activée lorsque l'accélération latérale potentielle $a_{ykin}$ ne dépasse pas en valeur absolue la valeur maximale admissible d'accélération latérale $a_y{}^{max}$. Les consignes automatiques d'angle de braquage $\delta$car et de vitesse vr sont alors prises égales respectivement, à celle calculée dans l'exécution immédiatement précédente de l'étape 120 et, à celle positionnée dans l'exécution immédiatement précédente de l'étape 129.

Une étape 167 d'ajustement est activée lorsque l'accélération latérale potentielle $a_{ykin}$ dépasse en valeur absolue la valeur maximale admissible d'accélération latérale $a_y{}^{max}$ de façon à réduire la valeur v de vitesse potentielle, par exemple en en retranchant une valeur préfixée DecSpeed.

La valeur DecSpeed peut être fixe de l'ordre par exemple de 0,5 m/s ou positionnée à un pourcentage, par exemple de l'ordre de 5% de la vitesse courante. La valeur DecSpeed peut aussi être donnée par des cartographies en fonction de la vitesse et de l'accélération latérale maximale admise pour le véhicule.

D'autres moyens que celui de retrancher une valeur préfixée, peuvent être utilisés pour réduire la valeur v de vitesse potentielle comme par exemple celui consistant à multiplier la valeur v de vitesse potentielle par un coefficient inférieur à l'unité.

A la suite de l'étape 167, une étape de test 176 consiste à détecter si la nouvelle valeur potentielle de vitesse v ainsi réduite, est inférieure à la valeur minimale possible $v^{min}$ de vitesse.

Une étape 182 est activée lorsque la valeur potentielle de vitesse v réduite est inférieure à la valeur minimale possible $v^{min}$ de vitesse. Les consignes automatiques d'angle de braquage $\delta$car et de vitesse vr sont alors prises égales respectivement, à celle calculée dans l'exécution immédiatement précédente de l'étape 120 et, à celle positionnée dans l'exécution immédiatement précédente de l'étape 129.

Les étapes 120 et suivantes sont réactivées lorsque la valeur potentielle de vitesse v réduite n'est pas inférieure à la valeur minimale possible $v^{min}$ de vitesse.

Dans le mode de réalisation que nous venons de décrire en référence à la figure 5, la nouvelle valeur potentielle de vitesse v ainsi réduite en étape 167 a pour effet de réduire la distance de visée Id dans la réexécution de l'étape 120 et par conséquent généralement de réduire la distance qui sépare le point d'intersection de l'arc de cercle 12 avec la trajectoire locale 6. A valeur fixée de la constante T, on peut observer une diminution de l'accélération latérale sensiblement proportionnelle à la réduction de vitesse potentielle comme indiqué par la formule (vii) ci-dessus. Ceci peut s'expliquer par le fait qu'une diminution de la vitesse a pour effet ici de tendre à augmenter l'angle de braquage pour rattraper la trajectoire à expiration d'une durée déterminée par la constante T.

Dans le mode de réalisation que nous décrivons maintenant en référence à la figure 5a, on retrouve les étapes 100, 129, 150, 167, 176, 181, 182 du mode de réalisation de la figure 5.

L'étape 120 de la figure 5 est remplacée par une étape 121 dans laquelle la consigne automatique d'angle de braquage $\delta$car est calculée ici, comme dans l'étape 120, en fonction d'une part de la longueur L entre le centre de l'essieu de roue avant et le centre de l'essieu de roue arrière et d'autre part d'une distance de visée Id qui sépare le centre de l'essieu de roue arrière du point 4 à l'intersection de la trajectoire locale 6 et de l'arc de cercle 12 que le véhicule 7 parcourt lorsque l'angle de braquage $\delta$car est appliqué à ses roues directrices comme représenté sur la figure 4.

La distance de visée Id qui est calculée dans l'étape 121 est égale au produit de la vitesse potentielle v du véhicule par la constante T préalablement déterminée et par un gain variable $g_{var}$. Le gain variable $g_{var}$ est initialisé à une valeur unitaire dans une étape 110 qui précède l'étape 121 de sorte que la distance de visée Id qui est calculée à chaque première exécution de l'étape 121 succédant à une exécution de l'étape 110, est identique à celle calculée dans l'étape 120 du mode de réalisation précédent.

L'accélération latérale potentielle $a_{ykin}$ est calculée dans l'étape 121 de manière identique à celle de l'étape 120.

L'étape 121 consiste de plus à calculer une valeur Ecar d'écart maximal entre la trajectoire locale 6 et l'arc de cercle 12.

La valeur Ecar d'écart maximal est calculée par exemple au moyen d'un sous-programme CEcar prenant en argument l'angle de braquage $\delta$car, la trajectoire locale de référence {Xr, Yr} et les coordonnées xc, yc du point 4 de visée de la trajectoire locale.

L'angle de braquage $\delta$car donne le rayon de courbure R par la formule :

$$(viii)\ R := L\ /\ tan(\delta car)$$

La trajectoire locale de référence {Xr, Yr} donne les coordonnées xri, yri d'un point d'indice i croissant de la trajectoire locale pour calculer une distance di du point considéré par rapport au centre du cercle passant par l'arc de cercle 12 par la formule :

$$(ix)\ \ di := \sqrt{(R - yri)^2 + xri^2}$$

La distance di permet de calculer un écart Ecari entre le point d'indice i de la trajectoire locale et le point le plus proche de l'arc de cercle 12 par la formule :

$$(x)\ \ Ecari := R - di$$

Les coordonnées xc, yc du point 4 de visée de la trajectoire locale permettent d'arrêter les calculs d'écart Ecari pour l'indice i du point de visée.

Le sous-programme CEcar retourne alors une valeur Ecar d'écart maximal observable de la trajectoire qui correspond à la plus grande des valeurs calculées d'écart Ecari.

Une étape 122 est exécutée à la suite de l'étape 121 pour positionner une variable d'écart maximal admissible $Ecar^{max}$ à une valeur égale à la valeur Ecar d'écart maximal observable calculée dans l'étape 121 multipliée par un coefficient Maxecar de valeur supérieure à l'unité. A titre purement illustratif et non limitatif, on peut choisir des valeurs du coefficient Maxecar dans une plage de valeurs variant de 1,05 à 2, en d'autres termes dans une plage de valeurs variant d'une valeur proche de l'unité à sensiblement le double. Si Ecart est faible, le double peut être employé. Le Maxecart dépend alors aussi de la valeur d'Ecart.

Une étape 130 est exécutée avant l'étape 129 précédemment expliquée en référence à la figure 5. Dans une variante de réalisation, l'étape 129 peut aussi être exécutée directement à la suite de l'étape 122 avant une première exécution de l'étape 130.

L'étape 130 est une étape de vérification d'un ensemble de conditions comprenant celle selon laquelle l'accélération latérale potentielle $a_{ykin}$ dépasse en valeur absolue la valeur maximale admissible d'accélération latérale $a_y^{max}$ et au moins la condition selon laquelle la valeur Ecar d'écart maximal observable est inférieure à la valeur d'écart maximal admissible $Ecar^{max}$.

L'étape 150 est activée à la suite de l'étape 129 dès qu'une condition ne satisfait pas la vérification de l'étape 130.

Une étape 114 est activée lorsque toutes les conditions satisfont la vérification de l'étape 130.

L'étape 114 consiste principalement à augmenter le gain variable $g_{var}$, par exemple en lui ajoutant un incrément IncrG de valeur par exemple mais non nécessairement constante comprise entre 0,1 et 0,9.

La nouvelle valeur de gain variable $g_{var}$ est utilisée dans une étape 140 semblable à l'étape 121 mais exécutée par conséquent avec une valeur plus grande de la distance de visée Id que dans l'étape 121. Ceci a pour effet d'augmenter le rayon de courbure et par conséquent de diminuer la valeur de consigne automatique d'angle de braquage δcar recalculée dans l'étape 140. L'augmentation de rayon de courbure a aussi pour effet de diminuer l'accélération radiale $a_{ykin}$. Selon la nature de la trajectoire, ceci peut avoir pour effet d'augmenter la valeur Ecar d'écart maximal observable qu'il est important de contrôler dans une réexécution de l'étape 130 en comparant à la variable d'écart maximal admissible $Ecar^{max}$ positionnée dans l'étape 122, la nouvelle valeur Ecar d'écart maximal observable calculée dans l'étape 140. Les étapes 114 et 140 sont ainsi appelées à reboucler sur l'étape 130 tant que l'accélération radiale $a_{ykin}$ est supérieure ou égale à la valeur maximale admissible d'accélération latérale $a_y^{max}$ et que la valeur Ecar d'écart maximal observable ne dépasse pas la valeur Ecar d'écart maximal observable initialement pour la plus petite distance de visée Id calculée en étape 121.

Les étapes 114 et 140 permettent ainsi de diminuer l'accélération radiale $a_{ykin}$ en augmentant la distance de visée Id de façon à maintenir la vitesse v constante. Le maintien de la vitesse tant que faire se peut, a pour avantage de procurer un agrément supplémentaire de conduite en réduisant les décélérations longitudinales et les prolongations de durée du parcours. Cependant on remarque que la nature de la trajectoire représentée sur la figure 3 induit une augmentation de l'écart Eca entre le point 3 de la trajectoire et l'arc de cercle 13 lorsque le nouveau point de visée est le point 13. La condition de l'étape 130 qui porte sur la vérification de la valeur Ecar d'écart maximal observable, a pour but d'éviter que le véhicule ne s'éloigne trop de sa trajectoire de référence avant de la rattraper, et d'éviter ainsi les risques possibles de sortie de voie, de collision ou autres.

D'autres natures de trajectoire peuvent par contre ne pas induire d'augmentation d'écart de trajectoire ou n'induire que de très faibles augmentations comme c'est par exemple le cas sur une trajectoire de référence en ligne droite.

Une condition supplémentaire de l'étape 130 qui porte sur un nombre maximal d'itérations $N_{iter}^{max}$ des étapes 114 et 140, permet de limiter le temps de calcul qui, rappelons-le est effectué en temps réel, en évitant de répéter surabondamment l'activation des étapes 114 et 140. Le nombre maximal d'itérations $N_{iter}^{max}$ est par exemple fixé en mémoire EEPROM lors des études de développement en tenant compte des cycles d'échantillonnage des capteurs et de la puissance de calcul des calculateurs pour assurer une génération de références d'angle de braquage et de vitesse en deux échantillonnages successifs. Le nombre maximal d'itérations $N_{iter}^{max}$ peut aussi par exemple être fixé en mémoire EEPROM lors des études de développement de façon à ce que le ne dépasse pas une certaine valeur, déterminée en l'occurrence lors d'essais pratiqués sur un véhicule de présérie pour obtenir un comportement qui apparaît être le plus agréable au pilote d'essai, voire à un passager.

Dans ce cas, un nombre d'itérations $N_{iter}$ augmenté d'une unité à chaque activation de l'étape 114, est initialisée à zéro dans l'étape 110. L'étape 130 consiste alors de plus à vérifier que le nombre d'itérations $N_{iter}$ courant est inférieur au nombre maximal d'itérations $N_{iter}^{max}$.

D'autres conditions peuvent être envisagées en complément ou en remplacement de celle évoquée dans le paragraphe précédent, par exemple une condition portant sur une distance de visée Id maximale ou autre.

Il convient d'activer l'étape 140 pour diminuer l'accélération latérale potentielle $a_{ykin}$ lorsqu'elle n'est pas inférieure à la valeur maximale admissible d'accélération latérale $a_y^{max}$. Cependant il peut convenir de ne pas activer l'étape 140 malgré que l'accélération latérale potentielle $a_{ykin}$ est supérieure ou égale à la valeur maximale admissible d'accélération latérale $a_y{}^{max}$. C'est notamment le cas comme nous l'avons vu ci-dessus lorsque l'écart maximal observable Ecar est trop grand.

C'est pourquoi l'étape 150 vérifie si l'accélération latérale potentielle $a_{ykin}$ est supérieure ou égale à la valeur maximale admissible d'accélération latérale $a_y{}^{max}$ malgré la vérification de l'étape 130 conduisant à une non-exécution ou arrêt d'exécution des étapes 114 et 140.

A partir de l'étape 150, le procédé se poursuit en passant par tout ou partie des étapes 181, 167, 176, 182 de manière identique à celle décrite en référence à la figure 5. Notamment, tant que l'accélération latérale potentielle $a_{ykin}$ est supérieure ou égale à la valeur maximale admissible d'accélération latérale $a_y{}^{max}$ et que la vitesse potentielle v du véhicule après décrémentation n'est pas inférieure à la vitesse minimale $v_{min}$, le procédé reboucle sur l'étape 121.

Le procédé peut reboucler directement sur l'étape 121 en aval de l'étape 110 pour conserver la dernière valeur de gain variable obtenue en étape 114 de façon à gagner du temps de calcul par économie d'activations des étapes 114 et 140.

En rebouclant en amont de l'étape 110, le procédé réinitialise à l'unité la valeur du gain variable $g_{var}$ et donne ainsi la possibilité d'obtenir une distance de visée plus courte que celle obtenue à la suite de la dernière exécution de l'étape 140 si l'utilisation en étape 121 de la valeur diminuée de la vitesse potentielle v y conduit.

Les étapes du mode de réalisation du procédé qui viennent d'être décrites en référence à la figure 5a, permettent ainsi un équilibrage entre diminution de vitesse et allongement de distance de visée dans le but de satisfaire au mieux le confort des passagers par une accélération latérale dans la mesure du possible inférieure à une valeur maximale admissible.

Le mode de réalisation de la figure 5b est semblable à celui de la figure 5a. Simplement, dans le procédé de la figure 5a, l'étape 100 et à sa suite les autres étapes, sont activées régulièrement à chaque top d'horloge, par exemple toutes les 20 ms. Dans le procédé de la figure 5b, l'étape 100 et à sa suite les autres étapes, sont activées en permanence à la suite de chaque activation de l'une des étapes 181 ou 182.

Chacune des étapes 181 ou 182 exécutée dans le module 10 de pilotage automatique permet ainsi de générer directement la consigne automatiques d'angle de braquage δcar, et indirectement les consignes de couple de freinage Cfr et de couple d'accélération Car.

La figure 6 montre une exploitation possible de la référence de vitesse $v_r$ obtenue dans l'une des étapes 181 ou 182 pour générer les consignes de couple de freinage Cfr et de couple d'accélération Car.

Au démarrage du véhicule 7, les consignes de couple de freinage Cfr et de couple d'accélération Car sont initialisées à une valeur nulle dans une étape 190, lors de la mise en marche du moteur du véhicule.

Une erreur ε entre la référence de vitesse $v_r$ et une vitesse mesurée $v_m$ du véhicule 7, est calculée dans une étape 191.

L'erreur ε, à un coefficient multiplicateur près, est ajoutée à la valeur courante de la référence de couple d'accélération Car pour obtenir un besoin de couple Acc dans une étape 192.

Une étape de test 193 consiste à vérifier un ensemble de conditions pour déterminer parmi le couple d'accélération Car et le couple de freinage Cfr, celui qui convient pour satisfaire au mieux le besoin de couple Acc obtenu à l'étape 192, de manière à activer une étape 194 si le couple de freinage Cfr convient et à activer une étape 195 si le couple d'accélération Car convient.

Une première condition pour activer l'étape 195 est vérifiée positive lorsque le besoin de couple Acc est supérieur ou égal à zéro qui correspond à un besoin de vaincre ou compenser des forces dynamiques et dissipatives pour accélérer le véhicule, maintenir sa vitesse, ou le décélérer modérément, par exemple pour se caler sur une référence de vitesse plus basse.

Une deuxième condition pour activer l'étape 195 est vérifiée positive lorsque la consigne de couple de freinage Cfr est nulle.

D'autres conditions que celles exposées ci-dessus, peuvent être vérifiées dans l'étape 193 comme par exemple celle relative à une erreur ε de vitesse inférieure à un seuil négatif qui active immédiatement l'étape 194 même si le besoin de couple Acc est supérieur ou égal à zéro. Cette condition remédie aux inconvénients du temps de réponse généralement non nul de la régulation intégrale mise en oeuvre dans l'étape 195.

Lorsque toutes les conditions de l'étape 193 sont vérifiées positives, l'étape 195 est activée de manière à mettre en oeuvre une régulation intégrale de couple dans le but de fonctionner à erreur ε nulle de vitesse.

Dans l'étape 195, l'erreur ε de vitesse est multipliée par un gain d'accélération Ga intégral dont le produit est ajouté à une valeur précédente de consigne de couple d'accélération Car pour obtenir une nouvelle valeur de consigne de couple d'accélération Car.

Dès qu'une des conditions de l'étape 193 est vérifiée négative, l'étape 194 est activée de manière à mettre en oeuvre une régulation proportionnelle saturée de couple dans le but de fonctionner à court délai.

Dans l'étape 194, l'erreur ε de vitesse est multipliée par un gain de freinage Gf proportionnel pour obtenir une valeur inverse de consigne de couple de freinage Cfr, de façon à générer une consigne de couple de freinage Cfr positive lorsque l'erreur ε de vitesse est négative et une consigne de couple de freinage Cfr nulle lorsque l'erreur ε de vitesse est positive. La consigne de couple d'accélération Car est mise à zéro pour ne pas demander inutilement du couple au moteur pendant une phase de freinage.

Celle des étapes 194 ou 195 qui est activée, reboucle ensuite sur l'étape 191 de façon à élaborer la consigne de couple qui convient en fonction de l'erreur ε de vitesse mesurée vm par rapport à la consigne automatique de vitesse vr donnée par l'une des étapes 181, 182.

## Revendications

1. Procédé de pilotage automatique d'un véhicule comprenant :

   - une étape (100) initiale dans laquelle sont données une trajectoire locale (6) de référence et une vitesse potentielle (v) du véhicule ;
   - une étape (120, 121, 140) de calcul d'une consigne automatique d'angle de braquage ($\delta$car) qui fait décrire au véhicule un arc de cercle (12, 13) comportant un point d'intersection avec ladite trajectoire locale (6) de référence à une distance (ld) du véhicule, dans laquelle est calculée une accélération latérale ($a_{ykin}$) proportionnelle au carré de la vitesse potentielle (v) du véhicule décrivant ledit arc de cercle (12) ;
   - une étape (150) de comparaison de ladite accélération latérale ($a_{ykin}$) calculée avec une valeur maximale admissible d'accélération latérale ($a_y^{max}$) ;
   - une étape (181) de génération d'une consigne de vitesse (vr) positionnée à une valeur égale à celle de la vitesse potentielle (v) lorsque ladite accélération latérale ($a_{ykin}$) a une valeur inférieure à ladite valeur maximale admissible d'accélération latérale ($a_y^{max}$) ;
   - une étape (167) d'ajustement dans laquelle la valeur de la vitesse potentielle (v) est diminuée lorsque ladite accélération latérale ($a_{ykin}$) a une valeur supérieure ou égale à ladite valeur maximale admissible d'accélération latérale ($a_y^{max}$) de façon à calculer une accélération latérale ($a_{ykin}$) diminuée en réitérant ladite étape (120, 121, 140) de calcul.

2. Procédé de pilotage automatique selon la revendication 1, **caractérisé en ce que** la distance (ld) qui sépare le véhicule du dit point d'intersection avec la trajectoire, est calculé dans ladite étape (120, 121, 140) de calcul, proportionnellement à la vitesse potentielle (v) du véhicule.

3. Procédé de pilotage automatique selon l'une des revendications 1 ou 2, **caractérisé en ce que** la distance (ld) qui sépare le véhicule du dit point d'intersection avec la trajectoire, est calculé dans ladite étape (120, 121, 140) de calcul, en multipliant la vitesse potentielle (v) du véhicule par un coefficient variable croissant tant que ladite accélération latérale ($a_{ykin}$) a une valeur supérieure ou égale à ladite valeur maximale admissible d'accélération latérale ($a_y^{max}$) et qu'un écart (Ecar) entre ledit arc de cercle (12, 13) et la trajectoire locale (6) de référence est inférieur en valeur absolue à un maximum admissible d'écart (Ecar$^{max}$).

4. Procédé de pilotage automatique selon la revendication 3, **caractérisé en ce que** ledit écart (Ecar) est calculé égal au plus grand des écarts mesurables entre un point de l'arc de cercle (12, 13) et un point (2, 3, 4) de la trajectoire (6) qui se trouvent sur un même rayon de l'arc de cercle (12, 13).

5. Procédé de pilotage automatique selon la revendication 4, **caractérisé en ce que** ledit maximum admissible d'écart (Ecar$^{max}$) est calculé dans une étape (122) égal à une surévaluation de la valeur absolue de l'écart (Ecar) calculé dans exécution précédente d'étape (121) de calcul.

6. Procédé de pilotage automatique selon l'une des revendications 1 à 5, **caractérisé en ce qu'**il comprend une étape (182) de génération d'une consigne de vitesse (vr) positionnée à une valeur égale à celle de la vitesse potentielle (v) avant diminution lorsque la valeur de la vitesse potentielle (v) après diminution est inférieure à une valeur minimale admissible de vitesse potentielle.

7. Programme d'ordinateur comprenant des instructions de code de programme pour l'exécution des étapes du procédé selon l'une des revendications 1 à 6 lorsque ledit programme est exécuté sur un ou plusieurs ordinateurs.

8. Dispositif (40) de pilotage automatique d'un véhicule comprenant :

   - un module (10) de pilotage automatique recevant en entrée un descriptif ({Xr, Yr}) de trajectoire locale (6) de référence, ledit module (10) comportant en mémoire un programme d'ordinateur selon la revendication 7 pour générer une consigne automatique d'angle de braquage ($\delta$car) de façon à maintenir une accélération latérale ($a_{ykin}$) calculée en deçà d'une valeur maximale admissible d'accélération latérale ($a_y^{max}$).

9. Dispositif (40) de pilotage automatique selon la revendication 8, **caractérisé en ce qu'**il reçoit en entrée un retour de vitesse mesurée (vm) de façon à générer une consigne automatique de couple (Cfr, Car) de freinage et/ou d'accélération qui maintient ladite accélération latérale ($a_{ykin}$) en deçà d'une valeur maximale admissible d'accélération latérale ($a_y^{max}$).

10. Véhicule automobile comprenant un dispositif (40) de pilotage automatique selon l'une des revendications 8 ou 9 pour fonctionner en mode autonome.

**Patentansprüche**

1. Verfahren zur automatischen Steuerung eines Fahrzeugs, das enthält:

   - einen Anfangsschritt (100), in dem eine lokale Bezugsstrecke (6) und eine potentielle Geschwindigkeit (v) des Fahrzeugs angegeben werden;
   - einen Schritt (120, 121, 140) der Berechnung eines automatischen Lenkwinkel-Sollwerts ($\delta$car), der das Fahrzeug einen Kreisbogen (12, 13) beschreiben lässt, der einen Schnittpunkt mit der lokalen Bezugsstrecke (6) in einem Abstand (Id) zum Fahrzeug aufweist, in dem eine Seitenbeschleunigung ($a_{ykin}$) proportional zum Quadrat der potentiellen Geschwindigkeit (v) des Fahrzeugs berechnet wird, das den Kreisbogen (12) beschreibt;
   - einen Schritt (150) des Vergleichs der berechneten Seitenbeschleunigung ($a_{ykin}$) mit einem zulässigen Seitenbeschleunigung-Höchstwert ($a_y^{max}$) ;
   - einen Schritt (181) der Erzeugung eines Geschwindigkeitssollwerts (vr), der auf einem Wert gleich demjenigen der potentiellen Geschwindigkeit (v) positioniert ist, wenn die Seitenbeschleunigung ($a_{ykin}$) einen niedrigeren Wert als der zulässige Seitenbeschleunigung-Höchstwert ($a_y^{max}$) hat;
   - einen Schritt (167) der Anpassung, in dem der Wert der potentiellen Geschwindigkeit (v) verringert wird, wenn die Seitenbeschleunigung ($a_{ykin}$) einen Wert hat, der höher als der oder gleich dem zulässigen Seitenbeschleunigung-Höchstwert ($a_y^{max}$) ist, um eine verringerte Seitenbeschleunigung ($a_{ykin}$) zu berechnen, indem der Rechenschritt (120, 121, 140) wiederholt wird.

2. Verfahren zur automatischen Steuerung nach Anspruch 1, **dadurch gekennzeichnet, dass** der Abstand (Id), der das Fahrzeug vom Schnittpunkt mit der Strecke trennt, im Rechenschritt (120, 121, 140) proportional zur potentiellen Geschwindigkeit (v) des Fahrzeugs berechnet wird.

3. Verfahren zur automatischen Steuerung nach einem der Ansprüche 1 oder 2, **dadurch gekennzeichnet, dass** der Abstand (Id), der das Fahrzeug vom Schnittpunkt mit der Strecke trennt, im Rechenschritt (120, 121, 140) berechnet wird, indem die potentielle Geschwindigkeit (v) des Fahrzeugs mit einem variablen Koeffizienten multipliziert wird, der zunimmt, so lange die Seitenbeschleunigung ($a_{ykin}$) einen höheren oder gleichen Wert wie der zulässige Seitenbeschleunigung-Höchstwert ($a_y^{max}$) hat und eine Abweichung (Ecar) zwischen dem Kreisbogen (12, 13) und der lokalen Bezugsstrecke (6) im Absolutwert geringer als ein zulässiges Abweichungsmaximum (Ecar$^{max}$).

4. Verfahren zur automatischen Steuerung nach Anspruch 3, **dadurch gekennzeichnet, dass** die Abweichung (Ecar) gleich der größten der messbaren Abweichungen zwischen einem Punkt des Kreisbogens (12, 13) und einem Punkt (2, 3, 4) der Strecke (6) berechnet wird, die sich auf einem gleichen Radius des Kreisbogens (12, 13) befinden.

5. Verfahren zur automatischen Steuerung nach Anspruch 4, **dadurch gekennzeichnet, dass** das zulässige Abweichungsmaximum (Ecar$^{max}$) in einem Schritt (122) gleich einer Überbewertung des Absolutwerts der in der vorhergehenden Ausführung des Rechenschritts (121) berechneten Abweichung (Ecar) berechnet wird.

6. Verfahren zur automatischen Steuerung nach einem der Ansprüche 1 bis 5, **dadurch gekennzeichnet, dass** es einen Schritt (182) der Erzeugung eines Geschwindigkeitssollwerts (vr) enthält, der auf einem Wert gleich demjenigen der potentiellen Geschwindigkeit (v) vor der Verringerung positioniert wird, wenn der Wert der potentiellen Geschwindigkeit (v) nach Verringerung geringer als ein zulässiger Mindestwert potentieller Geschwindigkeit ist.

7. Computerprogramm, das Programmcodeanweisungen für die Ausführung der Schritte des Verfahrens nach einem der Ansprüche 1 bis 6 enthält, wenn das Programm auf einem oder mehreren Computern ausgeführt wird.

8. Vorrichtung (40) zur automatischen Steuerung eines Fahrzeugs, die enthält:

   - ein Modul (10) zur automatischen Steuerung, das am Eingang ein Deskriptiv ({Xr, Yr}) der lokalen Bezugsstrecke (6) empfängt, wobei das Modul (10) im Speicher ein Computerprogramm nach Anspruch 7 aufweist, um einen automatischen Lenkwinkel-Sollwert ($\delta$car) zu erzeugen, um eine berechnete Seitenbeschleunigung ($a_{ykin}$) unterhalb eines zulässigen Seitenbeschleunigung-Höchstwerts ($a_y{}^{max}$) zu halten.

9. Vorrichtung (40) zur automatischen Steuerung nach Anspruch 8, **dadurch gekennzeichnet, dass** sie am Eingang eine gemessene Geschwindigkeitsrückmeldung (vm) empfängt, um einen automatischen Brems- und/oder Beschleunigungsmoment-Sollwert (Cfr, Car) zu erzeugen, der die Seitenbeschleunigung ($a_{ykin}$) unterhalb eines zulässigen Seitenbeschleunigung-Höchstwerts ($a_y{}^{max}$) hält.

10. Kraftfahrzeug, das eine Vorrichtung (40) zur automatischen Steuerung nach einem der Ansprüche 8 oder 9 enthält, um im autonomen Modus zu arbeiten.

**Claims**

1. Method for automatically controlling a vehicle, including:

   - an initial step (100) in which are given a reference local trajectory (6) and a potential speed (v) of the vehicle;
   - a step (120, 121, 140) of calculating a turning angle automatic set point ($\delta$car) that causes the vehicle to describe a circular arc (12, 13) including a point of intersection with said reference local trajectory (6) at a distance (Id) from the vehicle, wherein there is calculated a lateral acceleration ($a_{ykin}$) proportional to the square of the potential speed (v) of the vehicle describing said circular arc (12);
   - a step (150) of comparing said calculated lateral acceleration ($a_{ykin}$) with a maximum permissible lateral acceleration value ($a_y{}^{max}$);
   - a step (181) of generating a speed set point (vr) set to a value equal to that of the potential speed (v) when said lateral acceleration ($a_{ykin}$) has a value lower than said maximum permissible lateral acceleration value ($a_y{}^{max}$) ;
   - an adjustment step (167) wherein the value of the potential speed (v) is reduced if said lateral acceleration ($a_{ykin}$) has a value greater than or equal to said maximum permissible lateral acceleration value ($a_y{}^{max}$) so as to calculate a reduced lateral acceleration ($a_{ykin}$) by reiteration of said calculation step (120, 121, 140).

2. Automatic control method according to Claim 1, **characterized in that** in said calculation step (120, 121, 140) the distance (Id) that separates the vehicle from said point of intersection with the trajectory is calculated proportionately to the potential speed (v) of the vehicle.

3. Automatic control method according to either one of Claims 1 and 2, **characterized in that** the distance (Id) that separates the vehicle from said point of intersection with the trajectory is calculated in said calculation step (120, 121, 140) by multiplying the potential speed (v) of the vehicle by a variable coefficient increasing when said lateral acceleration ($a_{ykin}$) has a value greater than or equal to said maximum permissible lateral acceleration value ($a_y{}^{max}$) and the absolute value of a distance (Ecar) between said circular arc (12, 13) and the reference local trajectory (6) is less than a maximum permissible distance (Ecar$^{max}$).

4. Automatic control method according to Claim 3, **characterized in that** said distance (Ecar) is calculated as equal to the greatest of the measurable distances between a point of the circular arc (12, 13) and a point (2, 3, 4) of the trajectory (6) both located on the same radius of the circular arc (12, 13).

5. Automatic control method according to Claim 4, **characterized in that** in a step (122) said maximum permissible distance (Ecar$^{max}$) is calculated equal to an overevaluation of the absolute value of the distance (Ecar) calculated in a previous execution of the calculation step (121).

6. Automatic control method according to any one of Claims 1 to 5, **characterized in that** it includes a step (182) of generating a speed set point (vr) set to a value equal to that of the potential speed (v) before reduction when the value of the potential speed (v) after reduction is less than a minimum permissible potential speed value.

7. Computer program including program code instructions for the execution of the steps of the method according to any one of Claims 1 to 6 when said program is executed on one or more computers.

8. Device (40) for automatically controlling a vehicle, including:

   - an automatic control module (10) receiving as input a reference local trajectory (6) descriptor ({Xr, Yr}), said module (10) holding in memory a computer program according to Claim 7 for generating a turning angle automatic set point ($\delta$car) so as to maintain a calculated lateral acceleration ($a_{ykin}$) short of a maximum permissible lateral acceleration value ($a_y^{max}$).

9. Automatic control device (40) according to Claim 8, **characterized in that** it receives as input measured speed (vm) feedback so as to generate a braking and/or acceleration torque (Cfr, Car) automatic set point to maintain said lateral acceleration ($a_{ykin}$) short of a maximum permissible lateral acceleration value ($a_y^{max}$).

10. Motor vehicle including an automatic control device (40) according to either one of Claims 8 and 9 in order to operate in autonomous mode.

Fig. 1

Fig. 4

*Fig. 2*

*Fig. 3*

$$Sc(Dist, Xr, Yr, v^{min}, v^{max})$$
$$v := v^{max}$$

100

$$Id := T \cdot v$$
$$Index := Get\text{-}Index(Dist, RTrajL, Id)$$
$$(xc, yc) := (Xr(Index), Yr(Index))$$
$$\delta_{car} := CStCom(xc, yc, L, Dist(Index))$$
$$a_{ykin} := v^2 \cdot \tan(\delta_{car}) / L$$

120

$$v_r := v$$

129

150

non

$$|a_{ykin}| \geq a_y^{max}$$

oui

$$v := v - DecSpeed$$

167

$$\delta_{car}, v_r$$

181

176

non

$$v < v^{min}$$

oui

182

$$\delta_{car}, v_r$$

*Fig. 5*

190

$$C_{fr} := 0 \ \& \ C_{ar} := 0$$

191

$$\varepsilon := v_r - v_m$$

192

$$Acc := C_{ar} + Ga \cdot \varepsilon$$

193

non

$$\varepsilon > -k \cdot v_r \ \& \ Acc \geq 0 \ \& \ C_{fr} = 0$$

oui

195

$$C_{fr} := Max(0 \ ; -Gf \cdot \varepsilon)$$
$$C_{ar} := 0$$

194

$$C_{ar} := C_{ar} + Ga \cdot \varepsilon$$

*Fig. 6*

100

$$Sc(Dist, Xr, Yr, v^{min}, v^{max})$$
$$v := v^{max}$$

140

$$Id := T \cdot g_{var} \cdot v$$
$$Index := \text{Get-Index}(Dist, RTrajL, Id)$$
$$(xc, yc) := (Xr(Index), Yr(Index))$$
$$\delta_{car} := CStCom(xc, yc, L, Dist(Index))$$
$$a_{ykin} := v^2 \cdot \tan(\delta_{car}) / L$$
$$Ecar := CEcar(\delta_{car}, Xr, Yr, xc, yc)$$

110 — $$N_{iter} := 0 \; ; \; g_{var} := 1$$

$$Id := T \cdot g_{var} \cdot v$$
$$Index := \text{Get-Index}(Dist, RTrajL, Id)$$
$$(xc, yc) := (Xr(Index), Yr(Index))$$
$$\delta_{car} := CStCom(xc, yc, L, Dist(Index))$$
$$a_{ykin} := v^2 \cdot \tan(\delta_{car}) / L$$
$$Ecar := CEcar(\delta_{car}, Xr, Yr, xc, yc)$$

121

*Fig. 5a*

$$Ecar^{max} := Maxecar \cdot |Ecar|$$  122

non

$$(|a_{ykin}| \geq a_y^{max}) \&$$
$$(N_{iter} < N_{iter}^{max}) \& (|Ecar| < Ecar^{max})$$

oui

130

$$v_r := v$$  129

$$N_{iter} := N_{iter} + 1$$
$$g_{var} := g_{var} + IncrG$$  114

150

non   $$|a_{ykin}| \geq a_y^{max}$$   oui

$$\delta_{car}, v_r$$  181

$$v := v - DecSpeed$$  167

non   $$v < v^{min}$$   oui   182

176

$$\delta_{car}, v_r$$

*Fig. 5b*

Sc(Dist, Xr, Yr, $v^{min}$, $v^{max}$)
$v := v^{max}$ — 100

$N_{iter} := 0$ ; $g_{var} := 1$ — 110

$Id := T \cdot g_{var} \cdot v$
Index := Get-Index(Dist, RTrajL, Id)
$(xc, yc) := (Xr(Index), Yr(Index))$
$\delta_{car} := CStCom(xc, yc, L, Dist(Index))$
$a_{ykin} := v^2 \cdot \tan(\delta_{car}) / L$
Ecar := CEcar($\delta_{car}$, Xr, Yr, xc, yc) — 121

122

$Ecar^{max} :=$
Maxecar $\cdot$ |Ecar|

$Id := T \cdot g_{var} \cdot v$
Index := Get-Index(Dist, RTrajL, Id)
$(xc, yc) := (Xr(Index), Yr(Index))$
$\delta_{car} := CStCom(xc, yc, L, Dist(Index))$
$a_{ykin} := v^2 \cdot \tan(\delta_{car}) / L$
Ecar := CEcar($\delta_{car}$, Xr, Yr, xc, yc) — 140

130

non ← $(|a_{ykin}| \geq a_y^{max})$ &
$(N_{iter} < N_{iter}^{max})$ & $(|Ecar| < Ecar^{max})$ → oui

$v_r := v$ — 129

150

114

non ← $|a_{ykin}| \geq a_y^{max}$ → oui

$N_{iter} := N_{iter} + 1$
$g_{var} := g_{var} + IncrG$

167

$\delta_{car}, V$ — 181

v := v - DecSpeed

non ← $v \geq v_r$ → oui

$\delta_{car}, v_r$ — 182

176

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080208461 A
- US 20090287376 A
- US 20120101713 A
- WO 2013150244 A
- WO 2013087514 A